# EUROPÄISCHE PATENTSCHRIFT

(11) **EP 2 287 468 B1**
(45) Veröffentlichungstag und Bekanntmachung des Hinweises auf die Patenterteilung: **01.03.2017**
(21) Anmeldenummer: 10007505.0
(22) Anmeldetag: 20.07.2010
(51) Int. Cl.: F04B 19/00, F04B 43/04, G01F 11/08

(54) **Dosiereinheit**
Dosing unit
Unité de dosage

(30) Priorität: 21.08.2009 DE 102009038492
(43) Veröffentlichungstag der Anmeldung: 23.02.2011
(73) Patentinhaber: Bürkert Werke GmbH, 74653 Ingelfingen (DE)
(72) Erfinder: Hamm, Thomas, 74653 Ingelfingen (DE); Hettinger, Christoph, 74653 Ingelfingen (DE)
(74) Vertreter: Prinz & Partner mbB

(56) Entgegenhaltungen:
- WO-A1-2004/090334
- WO-A1-2009/059664
- DE-A1-102008 042 071
- US-A- 4 047 844
- "Micro-Dosiereinheit Typ 7616", , 5. Juni 2009 (2009-06-05), XP002613036, Gefunden im Internet: URL:http://www.buerkert.com/products_data/ manuals/MA7616-Dosingunit-EU-ML.pdf [gefunden am 2010-12-07]

## Beschreibung

Die Erfindung betrifft eine Dosiereinheit zum präzisen Dosieren von kleinen Flüssigkeits- oder Gasmengen im µl Bereich, die im Wesentlichen aufgebaut ist aus einem Fluidgehäuse, einer Pumpe und zwei Ventilen. Ferner betrifft die Erfindung ein Verfahren zum Betreiben der Dosiereinheit.

Zum präzisen Dosieren von vorwiegend aggressiven Medien werden üblicherweise Spritzenpumpen, Membranpumpen oder Peristaltikpumpen eingesetzt. Diese Pumpen haben je nach Bauart für bestimmte Anwendungen Nachteile: Spritzenpumpen sind auf Grund der erforderlichen elektronischen Ansteuerung teuer und können nicht kontinuierlich fördern. Peristaltikpumpen und Membranpumpen sind für präzise Dosierungen zu ungenau; Membranpumpen können außerdem nur in einer Richtung fördern und können das Medium nicht gegen einen Rückdruck dicht schließen.

Es ist aber auch schon eine Dosiereinheit bekannt, mit der Medium in zwei Richtungen gefördert werden kann, und die im Wesentlichen aufgebaut ist aus einem Fluidgehäuse, einer Pumpe und zwei Ventilen.

Eine solche Dosiereinheit wird beispielsweise von der Firma Bürkert als Micro-Dosiereinheit Typ 7616 angeboten. Bei dieser Dosiereinheit ist auf einer Seite des Fluidgehäuses die Pumpe angeordnet, die mit einer auf derselben Seite des Fluidgehäuses liegenden Pumpenkammer zusammenwirkt. Auf der dazu gegenüberliegenden Seite des Fluidgehäuses sind die beiden Ventile angeordnet. Die Pumpe ist mit den beiden Ventilen über Fluidkanäle verbunden, die von einer Fluidgehäuseseite zur dieser gegenüberliegenden Fluidgehäuseseite durch das Fluidgehäuse hindurch geführt sind.

DE 10 2008 042 071 A1 offenbart eine Mikrodosierpumpeinheit mit einer Mikropumpe und zwei Ventilen. Der Grundkörper der Pumpeneinheit ist aus einem Oberteil und einem Unterteil aufgebaut. In den Grundkörper sind ein Einlassventil und ein Auslassventil integriert. Die Kalibrierung der Mikrodosierpumpeinheit erfolgt über eine Kalibriereinheit, die eine Messstrecke mit wenigstens zwei Messpunkten umfasst, an denen Sensoren angeordnet sind. Mehrere Dosiereinheiten werden vorteilhafterweise in einer Reihe angeordnet.

Ausgehend vom angegebenen Stand der Technik zeichnet sich die Dosiereinheit gemäß Anspruch 1 durch eine äußerst platzsparende und kompakte Bauweise aus, was dadurch erreicht wird, dass die Membranpumpe und beide Ventile nebeneinander auf der selben Seite des Fluidgehäuses angeordnet sind.

Fluidkanäle, die die Pumpenkammer und ein Ventil miteinander verbinden, werden im Folgenden als "Pumpenkanäle" bezeichnet, Fluidkanäle, die sich zwischen einem Anschluss der Dosiereinheit und einem Ventil erstrecken, als "Ventilkanäle".

Im Fluidgehäuse werden zwei Pumpenkanäle, die zunächst genauso wie gemäß der Dosiereinheit Typ 7616 durch das Fluidgehäuse hindurch ragen, ausgehend von der Pumpenkammer auf der dieser gegenüber liegenden Seite bis zu den Ventilanschlüssen auf der gegenüber liegenden Seite, weiter geführt, und von dort wieder zurück durch das Fluidgehäuse hindurch zu je einem Ventil. Ebenso werden die Ventilkanäle, die durch das Fluidgehäuse hindurch ragen, ausgehend von den Ventilen auf der diesen gegenüber liegenden Seite bis zu den beiden Anschlüssen der Dosiereinheit weiter geführt. Die Fluidkanäle werden mit einer Flachdichtung und Abschlussplatte verschlossen. Diese Art der Kanalführung ermöglicht es, dass die Pumpe und die beiden Ventile auf der gleichen Seite angeordnet werden können.

Das Fluidgehäuse ist im Wesentlichen quaderförmig ausgebildet. In einer vorteilhaften Ausführungsform der Dosiereinheit sind auf einer Seitenfläche nebeneinander die Pumpe und beide Ventile angeordnet und auf einer dazu senkrecht stehenden Seitenfläche die beiden Anschlüsse der Dosiereinheit, wodurch diese für den Benutzer leicht zugänglich sind.

Es werden 2/2-Wegemagnetventile und eine Membranpumpe eingesetzt. Der Pumpenhub kann mittels einer Stellschraube, die in einem Feingewinde läuft, das innerhalb der Abschlussplatte angeordnet ist, sehr genau eingestellt werden.

Bei einer weiteren Ausführungsform bildet das Fluidgehäuse mit einem darauf aufgesetzten und mit diesem fest verbundenen Deckel eine kompakte Einheit, in der sämtliche Komponenten wie Pumpe und Ventile sowie eine Ansteuerelektronik angeordnet sind. Dadurch ist die Dosiereinheit gegenüber äußeren Einflüssen robust und die im Deckel liegenden Geräte sind geschützt.

In einer Ausführungsform sind die beiden fluidischen Anschlüsse der Dosiereinheit im Fluidgehäuses innerhalb von zwei nebeneinander liegenden Sockeln angeordnet, die durch Ausnehmungen einer Flanschplatte ragen, die am Fluidgehäuse beispielsweise mittels Schrauben befestigt wird. Auf der Flanschplatte sind Bohrungen vorgesehen, mittels derer die Flanschplatte auf eine externe Anschlussplatte montiert werden kann.

Alternativ wird an das Fluidgehäuse eine Gewindeplatte angeschlossen, in deren durch diese hindurch gehende Ausnehmungen die beiden Sockel ragen, und die an ihrer vom Fluidgehäuse abgewandten Seite innerhalb der Ausnehmungen Gewinde zum Einschrauben von Schlauchverbindern aufweist.

Diese Geometrie und Ausgestaltung der Dosiereinheitanschlüsse als am Fluidgehäuse angeformte Sockel erlaubt eine flexible Ankopplung an Flansch- oder Gewindeplatten.

Vorteilhafter Weise enthält die Pumpe ein Koppelelement, das als zweiarmiger, gelagerter und schwenkbarer Hebel ausgestaltet ist und das an eine Membran angeschlossen ist. Das Koppelelement erfährt seine Bewegungskraft in bekannter Weise zum Beispiel durch einen Magnetantrieb. Ein erster Hebelarm kann die Pumpenkammer freigeben und verschließen und ein zweiter wirkt mit der Stellschraube zusammen, wodurch der Pumpenhub definiert wird.

Bei dem erfindungsgemäßen Verfahren zum Betreiben einer Dosiereinheit werden vordefinierte Pumpzyklen abgerufen, von denen jeder aufeinanderfolgend eine erste Phase, in der das eingangsseitige Ventil öffnet und wieder schließt, eine zweite Phase, in der ein Pumpenhub erfolgt, und eine dritte Phase umfasst, in der das ausgangsseitige Ventil öffnet und wieder schließt, wobei die erste Phase mit der zweiten Phase überlappt und die dritte Phase mit der zweiten Phase überlappt.

Eine Kalibrierung erfolgt über die Einstellung der Größe des Pumpenhubes. Zur genauen Messung des pro Pumpenhub geförderten Volumens bzw. Gewichtes des Fördermediums wird eine vorbestimmte Anzahl von Pumpzyklen ausgeführt, z.B. einhundert, und das geförderte Volumen durch die Anzahl von Zyklen dividiert. Alternativ erfolgt eine Kalibrierung über die Einstellung der Pumpzyklenzahl, die benötigt wird, um ein definiertes Gewicht von dosiertem Medium zu erhalten. In jedem Fall ist dann das dosierte Volumen unabhängig von Fertigungstoleranzen des Geräts, bzw. diese können ausgeglichen werden, und das Fluidgehäuse kann günstig im Spritzgussverfahren hergestellt werden.

Weitere Merkmale und Vorteile der Erfindung ergeben sich aus der folgenden Beschreibung einer bevorzugten Ausführungsform unter Bezugnahme auf die beigefügten Zeichnungen. In den Zeichnungen zeigen:
- Figur 1 eine Perspektivansicht einer Dosiereinheit;
- Figur 2 eine Perspektivansicht der Dosiereinheit mit einer anderen Ausführung ihrer fluidischen Anschlüsse;
- Figur 3 eine Explosionsansicht der Dosiereinheit;
- Figur 4 einen Teilschnitt der Dosiereinheit im Bereich ihrer Pumpe;
- Figur 5 eine Perspektivansicht eines Fluidkörpers;
- Figur 6 die Unterseite des Fluidkörpers mit darin eingebrachten Kanalabschnitten;
- Figur 7 ein vereinfachtes Schaltdiagramm für die Steuerung der Dosiereinheit;
- Figur 8 ein Ablaufdiagramm eines Pumpenzyklus.

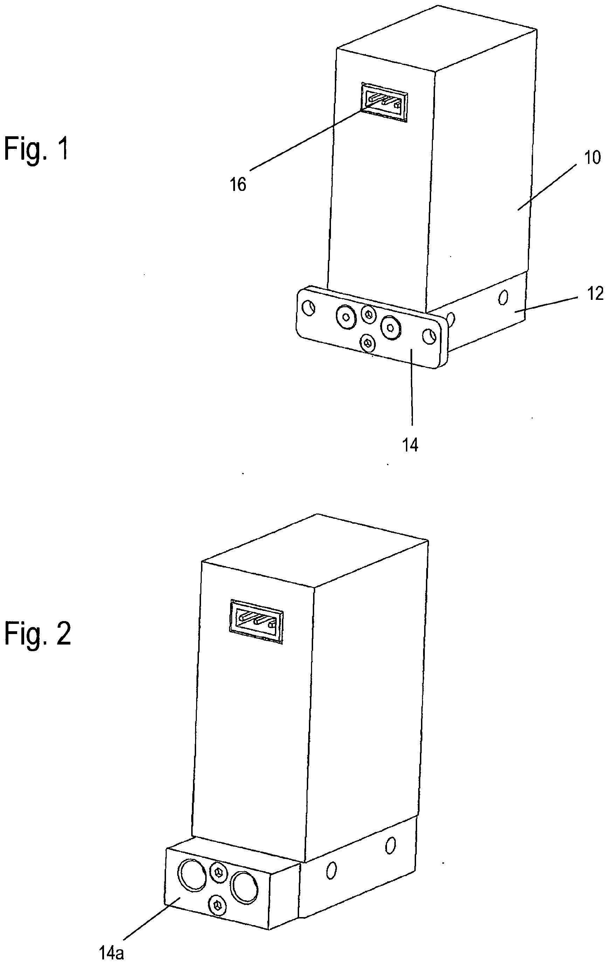

Wie die Figuren 1 und 2 zeigen, ist die Dosiereinheit ein allgemein quaderförmiges Gerät. Ein Deckel 10, der auch als Haube bezeichnet werden kann, ist auf einen Fluidkörper 12 aufgesetzt und umschließt alle Komponenten der Dosiereinheit. Mit dem Fluidkörper 12 ist in Figur 1 eine Flanschplatte 14 verschraubt. Ein Steckverbinder 16 mit drei Kontakten ist auf einer Seitenfläche des Deckels 10 zugänglich. Die Ausführung in Figur 2 unterscheidet sich von der nach Figur 1 lediglich durch eine Gewindeplatte 14a, die anstelle der Flanschplatte 14 angeschraubt ist.

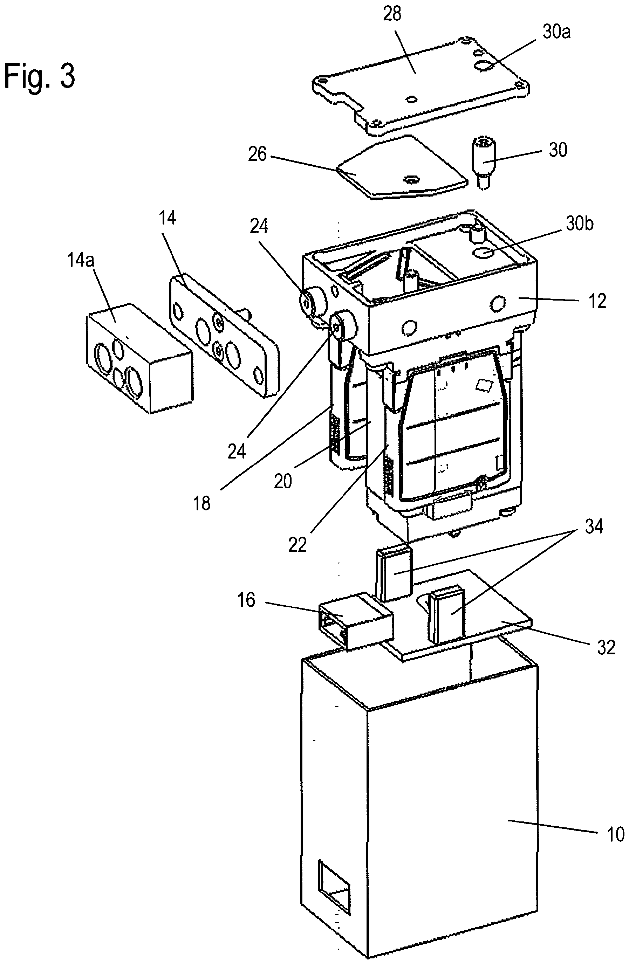

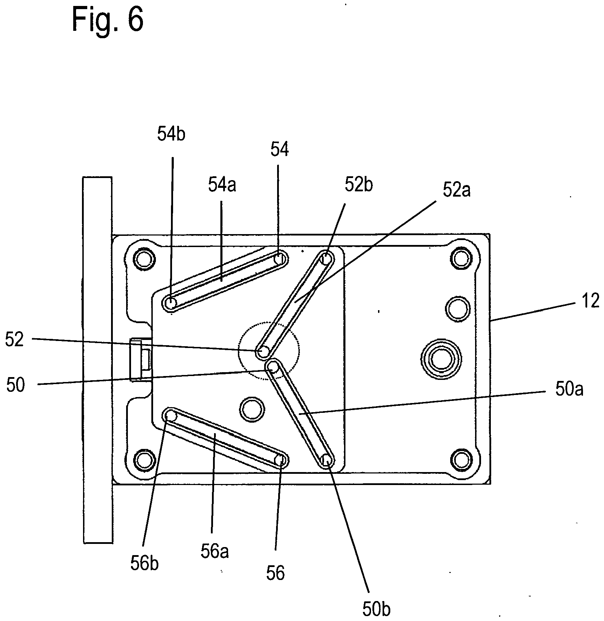

Zur besseren Illustration ist in Figur 3 die Dosiereinheit auf den Kopf gestellt. Auf einer Seite des Fluidkörpers 12 sind ein erstes Ventil 18, eine Pumpe 20 und ein zweites Ventil 22 nebeneinander aufgesetzt. Das Fluidgehäuse 12 hat die Form eines flachen Quaders. Auf einer Seitenfläche, die senkrecht zu der Hauptfläche ist, auf welcher die Ventile 18, 22 und die Pumpe 20 aufgebaut sind, befinden sich zwei Sockel 24, die jeweils einen fluidischen Anschluss bilden und von entsprechenden Öffnungen der Flanschplatte 14 bzw. Gewindeplatte 14a aufgenommen werden. Auf der Hauptfläche des Fluidkörpers 12, die von den Ventilen und der Pumpe abgewandt ist, befinden sich Abschnitte von Fluidkanälen, die in Figur 6 deutlicher dargestellt sind und die von einer Dichtplatte 26 abgedeckt werden. Eine Abschlussplatte 28 verschließt die von den Ventilen und der Pumpe abgewandte Hauptseite des Fluidkörpers 12, die an ihren Ecken Gewindebohrungen für Befestigungsschrauben aufweist, mit denen der gesamte Aufbau zusammengehalten wird. Eine Stellschraube 30 läuft in einem Feingewinde einer Gewindebohrung 30a der Abschlussplatte 28 und durchragt eine Bohrung 30b im Fluidgehäuse 12. Eine Elektronikbaugruppe 32, die hier nur schematisch als Platte gezeigt ist, hat Steckverbinder 34 für die Ventile 18, 22 und die Pumpe 20 sowie den von außen zugänglichen Steckverbinder 16.

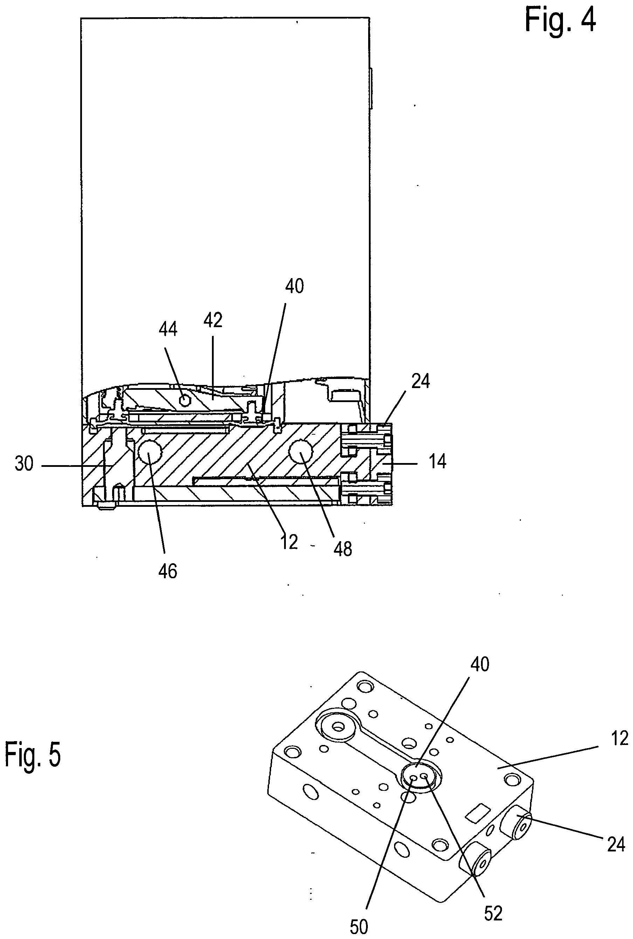

In Figur 4 ist der Schnitt durch die Pumpe und das Fluidgehäuse gelegt. Die Pumpe ist eine Membranpumpe. Die Membran der Pumpe wirkt mit einer Pumpenkammer 40 zusammen, die an einer benachbarten Hauptfläche des Fluidkörpers 12 gebildet ist. Die Membran ist an einen Arm eines zweiarmigen Betätigers 42 angeschlossen, der eine Wippe bildet und auf einer Achse 44 schwenkbar gelagert ist. An dem zweiten Arm des Betätigers 42 greift ein Ende der Stellschraube 30 an. In Figur 4 sind ferner zwei Querbohrungen 46, 48 des Fluidkörpers 12 zu sehen.

Wie in Figur 5 zu sehen ist, münden in die Pumpenkammer 40 zwei Kanäle 50, 52. Diese Kanäle 50, 52 durchqueren den Fluidkörper 12 und enden auf dessen in Figur 6 gezeigter Unterseite. Dort gehen sie in Kanalabschnitte 50a, 52a über, die ihrerseits an Kanälen 50b, 52b enden, welche den Fluidkörper 12 durchqueren und zu einem der beiden Ventile 18, 22 auf der gegenüberliegenden Hauptseite des Fluidkörpers 12 führen. Von den Ventilen 18, 22 führen zwei weitere Fluidkanäle 54, 56 quer durch den Fluidkörper 12 und gehen in Kanalabschnitte 54a bzw. 56a an der gegenüberliegenden Hauptfläche des Fluidkörpers 12 über. Diese Kanalabschnitte 54a, 56a enden an Fluidkanälen 54b, 56b, die zu den Anschlüssen der Flanschplatte 14 bzw. Gewindeplatte 14a führen.

Die Dosiereinheit ist völlig symmetrisch und kann daher in zwei entgegengesetzten Durchflussrichtungen betrieben werden. Die beiden fluidischen Anschlüsse an der Flanschplatte 14 bzw. Gewindeplatte 14a können sowohl als Einlass als auch als Auslass betrieben werden. Die Durchflussrichtung wird durch die Reihenfolge der Ansteuerung der Ventile 18, 22 bestimmt. Mittels der Stellschraube 30 wird der Pumpenhub der Membranpumpe eingestellt.

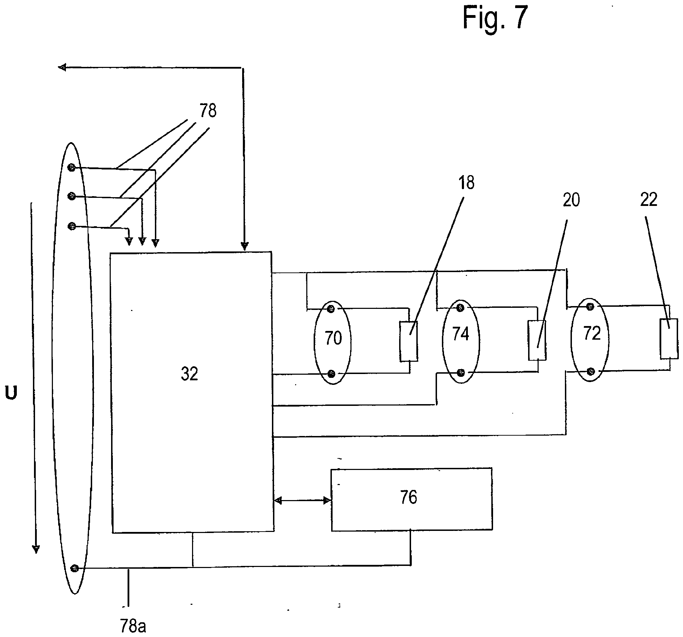

In Figur 7 ist sehr schematisch die Ansteuerelektronik der Dosiereinheit dargestellt. Die Elektronikbaugruppe 32, die einen Mikrocontroller mit zugehöriger Steuersoftware enthalten kann, hat Anschlüsse 70, 72 für die beiden Ventile 18, 22 und einen Anschluss 74 für die Pumpe 20. Sensoren 76 können ebenfalls mit der Elektronikbaugruppe 32 verbunden sein. Die drei Kontakte des Steckverbinders 16 entsprechen drei Steuerleitungen 78, die mit Eingängen der Elektronikbaugruppe 32 verbunden sind. Das Bezugspotenzial wird der Elektronikbaugruppe 32 und den Sensoren 76 über eine weitere Leitung 78a zugeführt. Zwischen der Leitung 78a und jeder der Leitungen 78 wird ferner die Betriebsspannung U zugeführt.

Je nach dem, an welche der Steuerleitungen 78 die Betriebsspannung U angelegt wird, ergibt sich entweder die eine oder die entgegengesetzte Durchflussrichtung oder ein Spülmodus der Dosiereinheit.

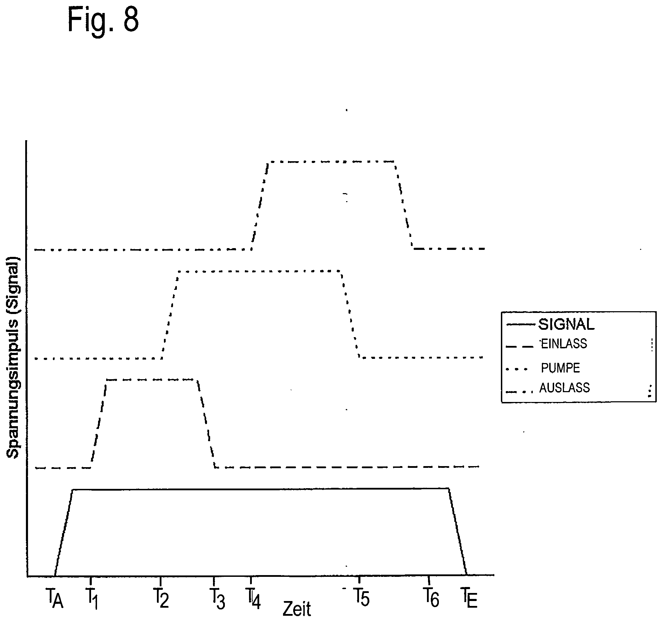

Die Dosiereinheit wird vorzugsweise in einzelnen oder aufeinanderfolgenden Pumpzyklen betrieben, die alle gleich sind. Ein solcher Pumpzyklus ist beispielshalber in Figur 8 dargestellt. Mit durchgezogener Linie ist in Figur 8 das Anlegen der Betriebsspannung U an eine der Steuerleitungen 78 vom Zeitpunkt T_{A} bis T_{E} als durchgezogene Linie eingezeichnet. Gestrichelt ist in Figur 8 die Einschaltfunktion des eingangsseitigen Ventils eingezeichnet. Das Ventil öffnet zum Zeitpunkt T₁. Punktiert eingezeichnet ist in Figur 8 die Funktion der Pumpe, die zum Zeitpunkt T₂ einen Saughub beginnt. Zum Zeitpunkt T₃ schließt das eingangsseitige Ventil. Strichpunktiert ist die Einschaltfunktion des ausgangsseitigen Ventils in Figur 8 dargestellt. Es öffnet zum Zeitpunkt T₄. Zum Zeitpunkt T₅ hat die Pumpe ihren Ausstoßhub beendet. Das ausgangsseitige Ventil schließt zum Zeitpunkt T₆. Man sieht also, dass die Öffnungszeiten der Ventile sich mit der Funktion der Pumpe überlappen.

Wird die Betriebsspannung U an eine andere der Steuerleitungen 78 angelegt, kehrt sich die Reihenfolge der Betätigung der beiden Ventile um, wodurch sich die entgegengesetzte Durchflussrichtung ergibt.

Die dritte der Steuerleitungen 78 kann verwendet werden, um durch Anlegen der Betriebsspannung U beide Ventile geöffnet zu halten und die Membran der Membranpumpe von der Pumpenkammer abzuheben, sodass die gesamte Dosiereinheit durchgespült werden kann.

Durch die mit dem erfindungsgemäßen Verfahren mögliche Kalibrierung der Dosiereinheit kann eine sehr hohe Dosiergenauigkeit erreicht werden, ohne dass die verschiedenen beteiligten Funktionsteile der Dosiereinheit mit geringen Toleranzen produziert werden müssen. Es können daher einfache Spritzgießtechniken verwendet werden.

Die bevorzugte Methode besteht darin, das mit jedem einzelnen Pumpenhub geförderte Volumen mittels der Stellschraube 30 auf einen gewünschten Wert einzustellen. Zur genauen Messung des geförderten Volumens wird eine bestimmte Anzahl von Pumpzyklen durchgeführt, beispielsweise einhundert. Das gemessene Gesamtvolumen wird dann durch die Anzahl von Pumpenzyklen dividiert. Die Volumenmessung kann durch Gewichtsbestimmung erfolgen. Auf diese Weise wird das pro Pumpenzyklus geförderte Volumen gegebenenfalls schrittweise auf den gewünschten Wert justiert, beispielsweise 5 µl.

Eine andere Methode besteht darin, die Anzahl von Pumpzyklen zu ermitteln, die benötigt wird, um ein bestimmtes Volumen zu fördern, das gegebenenfalls wieder durch Gewichtsbestimmung gemessen wird. Das Volumen wird dann durch die Anzahl von benötigten Pumpzyklen dividiert und ergibt das pro Pumpzyklus geförderte Volumen.

Im normalen Gebrauch wie auch bei der Kalibrierung wird die Dosiereinheit vorzugsweise per Software gesteuert.

Es besteht eine Reihe von zusätzlichen Optionen. So kann die Dosiereinheit mit verschiedenen Sensoren gekoppelt sein, um Betriebsgrößen zu erfassen. Ferner kann die Elektronikbaugruppe mit einer Schnittstelle ausgestattet sein, über die eine Parametrierung aller Steuerungsfunktionen der Dosiereinheit erfolgen kann. Zur Beschleunigung der Schaltvorgänge können die Antriebe der Ventile und Pumpe kurzzeitig übererregt werden. In Kombination damit oder auch getrennt können die Antriebe mit reduzierter Leistung betrieben werden, um Energie einzusparen.

## Patentansprüche

1. Dosiereinheit, die eine Membranpumpe (20), zwei Ventile (18, 22) und ein Fluidgehäuses (12) aufweist, wobei das Fluidgehäuse (12) zwei Anschlüsse (24), Pumpen- und Ventilkanälen und eine Pumpenkammer (40) aufweist, wobei
- das Fluidgehäuse (12) im Wesentlichen quaderförmig ist,
- die beiden Anschlüsse auf einer Seitenfläche des Fluidgehäuse nebeneinander liegen,
- die Membranpumpe (20) auf die Pumpenkammer (40) aufgesetzt ist, und
- die Pumpenkanäle (50, 50a, 50b, 52, 52a, 52b) mit der Pumpenkammer (20) und den Ventilen (18, 22) und die Ventilkanäle (54, 54a, 54b, 56, 56a, 56b) mit den Ventilen (18, 22) und den Anschlüssen kommunizieren, **dadurch gekennzeichnet, dass**
- die Membranpumpe (20) und die beiden Ventile (18, 22) auf derselben Seite des Fluidgehäuses (12) nebeneinander aufgesetzt sind, und
Abschnitte der Pumpen- und Ventilkanäle (50b, 52b, 54a, 56a) sich im Fluidgehäuse (12) auf der der Pumpe (20) und den beiden Ventilen (18, 22) gegenüber liegenden Seite erstrecken und mittels einer Flachdichtung (26) und einer Abschlussplatte (28) verschlossen sind.

2. Dosiereinheit nach Anspruch 1, wobei ein erster Pumpenkanal (52, 52a, 52b) mit dem ersten Ventil (18) und der Pumpenkammer (20) und ein zweiter Pumpenkanal (50, 50a, 50b) mit dem zweiten Ventil (22) und der Pumpenkammer (20) verbunden ist.

3. Dosiereinheit nach einem der vorstehenden Ansprüche, wobei ein erster Ventilkanal (54, 54a, 54b) das erste Ventil (18) mit einem ersten Anschluss und ein zweiter Ventilkanal (56, 56a, 56b) das zweite Ventil (22) mit dem zweiten Anschluss verbindet.

4. Dosiereinheit nach einem der vorstehenden Ansprüche, wobei die Pumpe und die beiden Ventile auf einer ersten Seitenfläche des Fluidgehäuses angeschlossen sind und die beiden Anschlüsse der Dosiereinheit auf einer zweiten Seitenfläche liegen, die zur ersten Seitenfläche senkrecht steht.

5. Dosiereinheit nach einem der Ansprüche 1 bis 4, wobei eine Stellschraube (30) zur Einstellung des Pumpenhubs und alle Befestigungsmittel für die Pumpe (20) und die beiden Ventile (18, 22) durch das Fluidgehäuse (12) und die Abschlussplatte (28) hindurchragen.

6. Dosiereinheit nach einem der vorstehenden Ansprüche, wobei die Pumpe (20), die beiden Ventile (18, 22) und eine Ansteuerelektronik (32) zusammen innerhalb eines Deckels (10) angeordnet sind, der mit dem Fluidgehäuse (12) fest verbunden ist.

7. Dosiereinheit nach einem der vorstehenden Ansprüche, wobei die Anschlüsse des Fluidgehäuses (12) innerhalb zweier nebeneinander liegender Sockel (24) angeordnet sind, die durch Ausnehmungen einer an das Fluidgehäuse (12) anschließbaren Flanschplatte (14) hindurch ragen, die mit einer Anschlussplatte verbunden werden kann.

8. Dosiereinheit nach Anspruch 7, wobei die beiden Sockel (24) in durchgehende Ausnehmungen einer an das Fluidgehäuse (12) anschließbaren Gewindeplatte (14a) münden, die an ihrer vom Fluidgehäuse (12) abgewandten Seite Gewinde zum Anschluss von Schläuchen aufweist.

9. Dosiereinheit nach einem der vorstehenden Ansprüche, wobei der Pumpenhub mittels Stellschraube (30) definiert wird, die mit einem ersten Hebelarm eines Koppelelements (42) zusammenwirkt, das als gelagerter zweiarmiger Hebel ausgestaltet ist und dessen zweiter Hebelarm an einer Membran angeschlossen ist, welche mit der Pumpenkammer (40) zusammenwirkt.

10. Verfahren zum Betreiben einer Dosiereinheit, nach einem der vorstehenden Ansprüche, bei dem vordefinierte Pumpzyklen abgerufen werden, von denen jeder aufeinanderfolgend eine erste Phase, in der das eingangsseitige Ventil öffnet und wieder schließt, eine zweite Phase, in der ein Pumpenhub erfolgt, und eine dritte Phase umfasst, in der das ausgangsseitige Ventil öffnet und wieder schließt, wobei die erste Phase mit der zweiten Phase zeitlich überlappt und die dritte Phase mit der zweiten Phase zeitlich überlappt und bei dem das pro Pumpenhub geförderte Volumen über die Anzahl von Pumpzyklen zum Fördern eines, gegebenenfalls durch Gewichtsmessung bestimmten, definierten Volumens bestimmt wird, **dadurch gekennzeichnet, dass** zur Kalibrierung des pro Pumpenhub geförderten Volumens das mit einer vorbestimmten Anzahl von Pumpzyklen geförderte Volumen gemessen wird, gegebenenfalls durch Gewichtsmessung, und durch die vorbestimmte Anzahl von Pumpzyklen dividiert wird und durch Einstellung der Größe des Pumpenhubes auf einen gewünschten Wert eingestellt wird.

11. Verfahren nach Anspruch 10, bei dem ein Ansteuersignal, das einen Pumpzyklus oder eine Folge von Pumpzyklen auslöst, je nach gewünschter Durchflussrichtung an den einen oder anderen von zwei Leitern angelegt wird.

12. Verfahren nach Anspruch 11, bei dem mit dem Ansteuersignal zugleich eine Versorgungsspannung angelegt wird.

## Claims

1. A metering unit comprising a diaphragm pump (20), two valves (18, 22), and a fluid housing (12), the fluid housing (12) including two ports (24), pump channels, valve channels, and a pump chamber (40), wherein
- the fluid housing (12) is substantially cuboid,
- the two ports are located next to each other on a side face of the fluid housing,
- the diaphragm pump (20) is mounted on the pump chamber (40), and
- the pump channels (50, 50a, 50b, 52, 52a, 52b) communicate with the pump chamber (20) and the valves (18, 22), and the valve channels (54, 54a, 54b, 56, 56a, 56b) communicate with the valves (18, 22) and the ports, **characterized in that**
- the diaphragm pump (20) and the two valves (18, 22) are mounted next to each other on the same side of the fluid housing (12), and
- sections of the pump channels and valve channels (50b, 52b, 54a, 56a) extend in the fluid housing (12) on the side opposite the pump (20) and the two valves (18, 22) and are closed by means of a flat gasket (26) and an end plate (28).

2. The metering unit according to claim 1, wherein a first pump channel (52, 52a, 52b) is connected with the first valve (18) and the pump chamber (20), and a second pump channel (50, 50a, 50b) is connected with the second valve (22) and the pump chamber (20).

3. The metering unit according to either of the preceding claims, wherein a first valve channel (54, 54a, 54b) connects the first valve (18) with a first port and a second valve channel (56, 56a, 56b) connects the second valve (22) with the second port.

4. The metering unit according to any of the preceding claims, wherein the pump and the two valves are connected on a first side face of the fluid housing and the two ports of the metering unit are located on a second side face which is perpendicular to the first side face.

5. The metering unit according to any of claims 1 to 4, wherein an adjusting screw (30) for adjusting the pump lift and all fastening elements for the pump (20) and the two valves (18, 22) extend through the fluid housing (12) and the end plate (28).

6. The metering unit according to any of the preceding claims, wherein the pump (20), the two valves (18, 22) and a control electronics (32) are arranged together inside a cover (10) which is firmly connected with the fluid housing (12).

7. The metering unit according to any of the preceding claims, wherein the ports of the fluid housing (12) are arranged inside two sockets (24) which are located one beside the other and which extend through recesses of a flange plate (14) which is adapted to be attached to the fluid housing (12) and can be connected with a connecting plate.

8. The metering unit according to claim 7, wherein the two sockets (24) open into continuous recesses of a threaded plate (14a) which is adapted to be attached to the fluid housing (12) and includes threads for the connection of tubes or hoses on its side facing away from the fluid housing (12).

9. The metering unit according to any of the preceding claims, wherein the pump lift is defined by means of the adjusting screw (30) which cooperates with a first lever arm of a coupling element (42) which is configured as a pivot-mounted two-armed lever and the second lever arm of which is connected to a diaphragm which cooperates with the pump chamber (40).

10. A method of operating a metering unit according to any of the preceding claims, in which predefined pumping cycles are retrieved, each of which comprises, in succession, a first phase in which the input-side valve opens and closes again, a second phase in which a pump lift is effected, and a third phase in which the output-side valve opens and closes again, the first phase overlapping in time with the second phase and the third phase overlapping in time with the second phase, and in which the volume delivered per pump lift is determined through the number of pumping cycles for delivering a defined volume that is determined by weight measurement, where required, **characterized in that** for calibrating the volume delivered per pump lift, the volume delivered by means of a predetermined number of pumping cycles is measured, by weight measurement, where required, and is divided by the predetermined number of pumping cycles and is adjusted to a desired value by adjusting the magnitude of the pump lift.

11. The method according to claim 10, in which a control signal that triggers a pumping cycle or a sequence of pumping cycles is applied to either one of two conductors, depending on the desired direction of flow.

12. The method according to claim 11, in which a supply voltage is applied at the same time with the control signal.

## Revendications

1. Unité de dosage, présentant une pompe à diaphragme (20), deux soupapes (18, 22) et un boîtier de fluide (12), le boîtier de fluide (12) présentant deux raccordements (24), des canaux de pompe et de soupape et une chambre de pompe (40),
- le boîtier de fluide (12) étant sensiblement parallélépipédique,
- les deux raccordements étant agencés l'un à côté de l'autre sur une face latérale du boîtier de fluide,
- la pompe à diaphragme (20) étant placée sur la chambre de pompe (40),
et
- les canaux de pompe (50, 50a, 50b, 52, 52a, 52b) communiquant avec la chambre de pompe (20) et les soupapes (18, 22), et les canaux de soupape (54, 54a, 54b, 56, 56a, 56b) communiquant avec les soupapes (18, 22) et les raccordements, **caractérisée en ce que**
- la pompe à diaphragme (20) et les deux soupapes (18, 22) sont placées l'une à côté des autres du même côté du boîtier de fluide (12), et
- des tronçons des canaux de pompe et de soupape (50b, 52b, 54a, 56a) s'étendent dans le boîtier de fluide (12) du côté opposé à la pompe (20) et aux soupapes (18, 22) et sont fermés au moyen d'un joint plan (26) et d'une plaque de fermeture (28).

2. Unité de dosage selon la revendication 1, un premier canal de pompe (52, 52a, 52b) étant relié à la première soupape (18) et à la chambre de pompe (20), et un deuxième canal de pompe (50, 50a, 50b) étant relié à la deuxième soupape (22) et à la chambre de pompe (20).

3. Unité de dosage selon l'une des revendications précédentes, un premier canal de soupape (54, 54a, 54b) reliant la première soupape (18) à un premier raccordement, et un deuxième canal de soupape (56, 56a, 56b) reliant la deuxième soupape (22) au deuxième raccordement.

4. Unité de dosage selon l'une des revendications précédentes, la pompe et les deux soupapes étant raccordées sur une première face latérale du boîtier de fluide, et les deux raccordements de l'unité de dosage étant agencés sur une deuxième face latérale qui est perpendiculaire à la première face latérale.

5. Unité de dosage selon l'une des revendications 1 à 4, une vis de réglage (30) pour l'ajustage de la course du piston et l'ensemble des moyens de fixation pour la pompe (20) et les deux soupapes (18, 22) faisant saillie à travers le boîtier de fluide (12) et la plaque de fermeture (28).

6. Unité de dosage selon l'une des revendications précédentes, la pompe (20), les deux soupapes (18, 22) et une électronique de commande (32) étant agencées ensemble à l'intérieur d'un couvercle (10) qui est relié de manière solidaire au boîtier de fluide (12).

7. Unité de dosage selon l'une des revendications précédentes, les raccordements du boîtier de fluide (12) étant agencés à l'intérieur de deux socles (24) qui sont placés l'un à côté de l'autre et qui font saillie à travers des évidements d'une plaque de bride (14) qui est apte à être raccordée au boîtier de fluide (12) et qui est apte à être reliée à une plaque de raccordement.

8. Unité de dosage selon la revendication 7, les deux socles (24) débouchant dans des évidements traversants d'une plaque taraudée (14a) qui est apte à être raccordée au boîtier de fluide (12) et qui présente de son côté détourné du boîtier de fluide (12) des taraudages pour le raccordement de tuyaux.

9. Unité de dosage selon l'une des revendications précédentes, la course de la pompe étant définie au moyen d'une vis de réglage (30) qui coopère avec un premier bras de levier d'un élément de couplage (42) lequel est réalisé sous forme de levier à palier à deux bras et dont le deuxième bras de levier est raccordé à un diaphragme qui coopère avec la chambre de pompe (40).

10. Procédé de mise en oeuvre d'une unité de dosage selon l'une des revendications précédentes, dans lequel des cycles de pompe prédéfinis sont extraits, lesquels comprennent chacun successivement une première phase dans laquelle la soupape côté entrée s'ouvre et se referme, une deuxième phase dans laquelle une course de la pompe est réalisée, et une troisième phase dans laquelle la soupape côté sortie ouvre et se referme, la première phase se recouvrant dans le temps avec la deuxième phase, et la troisième phase se recouvrant dans le temps avec la deuxième phase, et dans lequel le volume refoulé par course de pompe est déterminé au moyen du nombre de cycles de pompe pour le refoulement d'un volume défini, déterminé, le cas échéant, par mesure du poids, **caractérisé en ce que** pour le calibrage du volume refoulé par course de pompe, le volume refoulé au moyen d'un nombre prédéterminé de cycles de pompe est mesuré, le cas échéant par mesure du poids, et est divisé par le nombre prédéterminé de cycles de pompe et est réglé à une valeur désirée par le réglage de la grandeur de la course de la pompe.

11. Procédé selon la revendication 10, dans lequel un signal de commande qui déclenche un cycle de pompe ou une séquence de cycles de pompe est appliqué à l'un ou à l'autre de deux conducteurs selon le sens d'écoulement désiré.

12. Procédé selon la revendication 11, dans lequel une tension d'alimentation est appliquée en même temps que le signal de commande.
